# EUROPÄISCHE PATENTSCHRIFT

(11) **EP 1 189 970 B1**
(45) Veröffentlichungstag und Bekanntmachung des Hinweises auf die Patenterteilung: **19.03.2003**
(21) Anmeldenummer: 00931073.1
(22) Anmeldetag: 26.04.2000
(51) Int. Cl.: C08G 69/00

(54) **CARBOXYLFUNKTIONELLES ADDITIV ZUR AUFKONDENSIERUNG VON POLYAMIDEN**
CARBOXY FUNCTIONAL ADDITIVE FOR CONDENSING POLYAMIDES
ADDITIF CARBOXY-FONCTIONEL DE CONDENSATION DE POLYAMIDES

(30) Priorität: 03.05.1999 DE 19920336
(43) Veröffentlichungstag der Anmeldung: 27.03.2002
(73) Patentinhaber: L. Brueggemann KG Sprit- und Chemische Fabrik, 74076 Heilbronn (DE)
(72) Erfinder: LEHMANN, Dieter, D-01640 Coswig (DE); TITZSCHKAU, Klaus, D-71543 Wüstenrot (DE)
(74) Vertreter: Grünecker, August, Dipl.-Ing.
(86) Internationale Anmeldenummer: EP0003757
(87) Internationale Veröffentlichungsnummer: WO00066650

(56) Entgegenhaltungen:
- EP-A- 0 415 069
- EP-A- 0 837 088
- DATABASE WPI Section Ch, Week 199317 Derwent Publications Ltd., London, GB; Class A23, AN 1993-140481 XP002148962 & JP 05 078561 A (INUI T), 30. März 1993 (1993-03-30)
- DATABASE WPI Section Ch, Week 199317 Derwent Publications Ltd., London, GB; Class A23, AN 1993-140479 XP002148963 & JP 05 078559 A (INUI T), 30. März 1993 (1993-03-30)
- "AN 1991-364169" PLASDOC - CENTRAL PATENTS INDEX - BASIC ABSTRACTS JOURNAL, SECTION A., Bd. 1991, XP002148960 DERWENT PUBLICATIONS LTD. LONDON., GB & JP 03 237155 A (TORAY IND INC) 23. Oktober 1991 (1991-10-23)
- "AN 1989-337163" PLASDOC - CENTRAL PATENTS INDEX - BASIC ABSTRACTS JOURNAL, SECTION A., Bd. 1989, XP002148961 DERWENT PUBLICATIONS LTD. LONDON., GB & JP 01 252640 A (ASAHI CHEM CORP) 9. Oktober 1989 (1989-10-09)

## Beschreibung

Die vorliegende Erfindung betrifft ein Additiv zur Aufkondensierung von Oligo- und/oder (Co-)Polyamiden, dessen Verwendung zur Aufkondensierung von Oligo- und/oder (Co-)Polyamiden sowie ein Verfahren zur Aufkondensierung von Oligo- und/oder (Co-)Polyamiden.

Polyamide sind Makromoleküle, die in der Hauptkette die Gruppierung -CO-NHenthalten. Man erhält sie entweder aus zwei verschiedenen bifunktionellen Monomerbausteinen, von denen jeder zwei gleiche reaktive Gruppen, z.B. -NH₂ bzw. -COOH, enthält, oder aus einheitlichen bifunktionellen Bausteinen, die je eine Aminound Carboxylgruppe tragen oder ausbilden können. Die Hauptvertreter sind Polyamid 6,6 und Polyamid 6. Die Polyamidbausteine können in weitem Umfang variiert werden (A. Echte, Handbuch der technischen Polymerchemie). Polyamide werden beispielsweise durch Polykondensationsreaktionen bzw. durch ringöffnende Polymerisation von Lactamen hergestellt. Die Molmasse der Polyamide hängt stark von den Verfahrensbedingungen ab. Da die technischen Eigenschaften der Polyamide einerseits von der Herstellung, d.h. von der Molmasse und vom Gehalt an Monomeren, Oligomeren und Aminoendgruppen, und andererseits von der Verarbeitung, d.h. vom Kristallisationsgrad und vom Wassergehalt, abhängen, werden hohe Anforderungen an die Verfahrensweise gestellt, um bestimmte Polyamide mit gleichbleibender Qualität herzustellen. Wesentlich ist auch, vor allem im Spinnprozeß, der Ausschluß von festen Verunreinigungen und Gelteilchen sowie eine sachgemäße Lagerung des Granulats unter Luft- und Feuchtigkeitsausschluß.

Es ist daher weit verbreitet, die Herstellung von Polyamiden in zwei Prozeßstufen zu teilen. Zuerst wird ein sogenanntes Vorkondensat hergestellt, das dann von den individuellen Anwendern in einem zweiten Schritt weiter modifiziert wird, beispielsweise durch Aufkondensation und Zumischen von Zuschlagstoffen, um so die gewünschten Eigenschaften des Endproduktes einzustellen.

Solch ein Zweischrittverfahren ist vor allem dahingehend vorteilhaft, daß, abhängig von der Verarbeitungsart, die gewünschten Verarbeitungseigenschaften gezielt eingestellt werden können. So sollen beispielsweise Polyamide, die in Spritzgießverfahren verarbeitet werden, einen höheren Schmelzindex (MFI) aufweisen als Polyamide, die als thermoplastische Extrusionsmassen Einsatz finden. Extrusionsmassen haben üblicherweise eine höhere relative Molekülmasse und damit eine höhere Schmelzviskosität bzw. einen niedrigeren Schmelzindex, verglichen mit Spritzgußmassen aus den gleichen Werkstoffen. Höhere Schmelzviskositäten bzw. niedrigere Schmelzindices ermöglichen unter anderem ein besseres Stehvermögen nach dem Austritt aus der Düse beim Extrudieren. Höhere relative Molmasse, höhere Schmelzviskosität bzw. verringerter Schmelzindex ist außerdem mit verbesserten mechanischen Werten verbunden. Die Verarbeitung im Spritzguß ist jedoch schwieriger.

Es gibt eine ganze Reihe von Verfahren, die eine gezielte Aufkondensierung von Oligound/oder (Co-)Polyamiden ermöglichen, um so die gewünschten Eigenschaften einzustellen.

Beispielsweise offenbaren die DE-A-4 136 082, die DE-A-4 136 083, die DE-A-4 136 081, die DE-A-4 136 078 sowie die DE-A-4 136 079 Verfahren zur Herstellung von schnell aufkondensierten Polyamiden. Dabei werden als Additive zur schnellen Aufkondensierung Diisocyanate, verkappte bzw. blockierte Diisocyanate oder Oligound/oder Polyurethane verwendet.

Ein weiteres Beispiel zur Einstellung der Viskosität von Polyamidschmelzen offenbart die EP-A-408957. Zur Viskositätserhöhung von Lactamschmelzen werden dort bestimmte (Co-)Polyamide, welche sich in der Lactamschmelze lösen, verwendet M. Xanthos beschreibt darüberhinaus in Reactive Extrusion, Principles and Practice, Hanser, München (1992) die Verwendung von Epoxidverbindungen zur Aufkondensierung von Polyamiden.

Weiterhin ist auch das reaktive Mischen von Polyamiden mit Polycarbonaten bekannt. Beispielsweise offenbaren A.Valenza et al. in Intern. Polymer Processing IX 3 (1994), daß Polyamid 6 unter bestimmten Bedingungen mit Polycarbonaten umgesetzt werden kann. Dabei entstehen aus den eigentlich nicht mischbaren Polymeren durch chemische Reaktionen unter anderem Blockcopolymere, was zu einer Verbesserung z.B. der Lösungsmittelbeständigkeit von Polycarbonaten führt. Allerdings werden nur dann Reaktionen erreicht, wenn ein hoher Anteil an NH₂-Endgruppen in dem verwendeten Polyamid vorliegt. Polyamide mit COOH-Endgruppen reagieren laut dieser Publikation nicht.

Weiterhin bietet Ciba-Geigy ein Additiv zur Stabilisierung von Polyamiden beim Recycling an (EB 35-50). Damit soll der Abbau beim Recycling durch Hydrolyse kompensiert werden. Allerdings zeigt die Produktinformation selber, daß der Schmelzindex des stabilisierten Polyamids bei mehrfacher Verarbeitung wieder ansteigt, d.h. es ist keine Mehrfachextrusion möglich.

Die im Stand der Technik beschriebenen Verfahren weisen verschiedene Nachteile auf. Zum einen ist die Verwendung von Diisocyanaten in freier, blockierter oder verkappter Form dahingehend nachteilhaft, daß die z.T. hohe Toxizität der entstehenden freien Verbindungen besondere Schutzmaßnahmen bei der Verwendung erfordert. Die Dosierung in Produktionsmaschinen ist darüberhinaus problematisch. Weiterhin besitzen diese Verbindungen eine so hohe Reaktivität, daß teilweise eine sehr schnelle Reaktion unter Gelbildung und Vernetzung erfolgt, was zu unerwünschten Schwankungen in der Produktqualität und zu Inhomogenitäten im Endprodukt führt und beispielsweise in Spinnverfahren Störungen verursacht.

Der Zusatz der (Co-)Polyamide ist auf die in der oben genannten europäischen Patentanmeldung angegebenen Lactamschmelzen beschränkt und führt außerdem zu einer wesentlichen Verteuerung der Endprodukte, da eine große Menge an Additiv zugesetzt werden muß.

Insgesamt zeigen die modifizierten Polyamide des Standes der Technik keine stabilen Weiterverarbeitungseigenschaften, d.h. eine Mehrfachextrusion ist nur mit einer Verschlechterung von mechanischen Eigenschaften möglich. Dies ist für viele Anwendungen nicht akzeptabel, da der beispielsweise in einem Spinnprozeß anfallende Abfall als reines Polymer oft nur unter erneuter Modifizierung wiederverwendbar ist. Darüberhinaus reagieren die in den oben beschriebenen Verfahren eingesetzten Additive häufig mit anderen Zuschlagstoffen, wie Stabilisatoren oder Verarbeitungshilfsmitteln, was zu Nebenreaktionen und zu unerwünschten Verfärbungen führt und einen erhöhten und damit teureren Einsatz der Additive nötig macht.

Es ist deshalb die Aufgabe der vorliegenden Erfindung, die oben genannten Probleme des Standes der Technik zu lösen und ein Verfahren zur Aufkondensierung von Oligound/oder (Co-)Polyamiden zur Verfügung zu stellen, das es ermöglicht, die gewünschten Eigenschaften von Polyamiden stabil und sicher einzustellen, wobei auch eine Mehrfachverarbeitung des erhaltenen Aufkondensationsproduktes möglich sein sollte.

Diese Aufgabe wird durch ein Verfahren zur Aufkondensierung von Oligo- und/oder (Co-)Polyamiden gelöst, das dadurch gekennzeichnet ist, daß als Additiv zur Aufkondensierung mindestens eine Verbindung mit mindestens zwei Carbonateinheiten verwendet wird.

Das erfindungsgemäße Verfahren ermöglicht die Aufkondensierung von Oligo- und/oder (Co-)Polyamiden, ohne daß es zur Gelbildung und damit zu Inhomogenitäten kommt. Weiterhin ist das dabei erfindungsgemäß verwendete Additiv nicht oder deutlich weniger toxisch als die bisher eingesetzten Diisocyanate und Epoxyverbindungen und eine mehrfache Verarbeitung des erhaltenen Aufkondensationsproduktes ist sowohl in trockener als auch in feuchter Form möglich, ohne daß es zu einem Abfall der wichtigen mechanischen Kennwerte kommt.

Weiterhin stellt die vorliegende Erfindung die Verwendung mindestens einer Verbindung mit mindestens zwei Carbonateinheiten zur Aufkondensierung von Oligo- und/oder (Co-)Polyamiden zur Verfügung.

Darüberhinaus stellt die vorliegende Erfindung ein Additiv zur Aufkondensierung von Oligo- und/oder (Co-)Polyamiden zur Verfügung.

Im folgenden wird die vorliegende Erfindung näher beschrieben, wobei der Ausdruck Aufkondensierung bzw. Aufkondensieren synonym mit den Begriffen Modifizierung bzw. Modifizieren verwendet wird. Alle Verhältnisse, so nicht anders angegeben, beziehen sich auf das Gewicht, alle Molgewichtsangaben sind Gewichtsmittel.

In dem erfindungsgemäßen Verfahren zur Aufkondensierung von Oligo- und/oder (Co-)Polyamiden können alle möglichen Polyamide verwendet werden. Illustrative Beispiele davon sind PA 6, PA 11, PA 12, PA 6,6, PA 6,10, PA 6,11, PA 6,12, PA 6,6/6, PA 4,6, PA 6-T, PA 6,6-T, Trogamide (Creanova), teilaromatische Polyamide sowie die entsprechenden Copolyamide, Mischungen von Polyamiden und thermoplastisch verarbeitbare Aramide. Erfindungsgemäß einsetzbar sind beispielsweise auch Blockcopolymere aus Polyamiden und Polyethem, die wegen ihrer interessanten mechanischen Eigenschaften als thermoplastische Elastomere in zahlreichen Bereichen Anwendung finden.

Bevorzugt haben die Ausgangsverbindungen Molgewichte von größer als 5000, insbesondere bevorzugt von größer als 10.000. Bevorzugt sind die aufzukondensierenden Oligo- und/oder (Co-)Polyamide solche, die z.T. noch Aminogruppen aufweisen. Diese können als End- aber auch als Seitengruppen vorliegen.

In dem erfindungsgemäßen Verfahren wird mindestens eine Verbindung mit mindestens zwei Carbonateinheiten in einem Mengenverhältnis von 0,005 bis 10 Gew.-% eingesetzt, berechnet auf der Grundlage der Carbonateinheiten im Verhältnis zum eingesetzen Oligo- und/oder (Co-)Polyamid. Vorzugsweise liegt das oben beschriebene Verhältnis im Bereich von 0,01 bis 5,0 Gew.-%, besonders bevorzugt im Bereich von 0,5 bis 3 Gew.-%.

Das in dem erfindungsgemäßen Verfahren verwendete Additiv zur Aufkondensierung der Oligo- und/oder (Co-)Polyamide ist mindestens eine Verbindung mit mindestens zwei Carbonateinheiten. Diese Verbindung kann niedermolekular, oligomer oder polymer sein. Sie kann vollständig aus Carbonateinheiten bestehen oder sie kann noch weitere Einheiten aufweisen. Diese sind vorzugsweise Oligo- oder Poly-amid-, -ester-, -ether-, -etheresteramid- oder -esteramideinheiten. Solche Verbindungen können durch bekannte Oligo- oder Polymerisationsverfahren bzw. durch polymeranaloge Umsetzungen hergestellt werden. Die dazu nötigen Kenntnisse sind dem Fachmann aus dem Stand der Technik bekannt.

Besteht die Verbindung mit mindestens zwei Carbonateinheiten nur aus Carbonateinheiten, so sind diese bevorzugt gewählt aus Einheiten auf Grundlage von Verbindungen der Formel 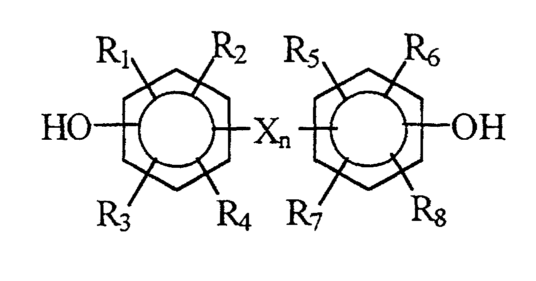 wobei
n 0 oder 1 ist;
X -O-; -S-; -S-S-; -SO-; -SO₂-, -SO₂-NR₁₂-, -CO-; -CO-O-;
-CO-NH-; -CH₂-, -C(CH₃)₂-; -NR₉-; -C(CF₃)₂- oder -CR₁₀R₁₁- bedeutet;
R₁ bis R₈, jeweils unabhängig, H, Alkyl oder Halogen bedeuten;
R₉ H, Alkyl oder Acyl bedeutet; wobei R₁₀ und R₁₁ miteinander unter Bildung eines Ringes verbunden sind und R₁₂ Alkyl oder Acyl bedeutet.

Die Alkylgruppe ist vorzugsweise eine Gruppe mit 1 bis 6 Kohlenstoffatomen, insbesondere bevorzugt mit 1 bis 3 Kohlenstoffatomen. Diese Gruppen können optional substituiert sein. Bevorzugte Beispiele von Substituenten sind Halogene (Cl, Br, F, I) und Alkoxygruppen mit 1 bis 3 Kohlenstoffatomen.

Die Acylgruppe (-COR) ist vorzugsweise eine Acylgruppe, in der R H, Alkyl mit 1 bis 5 Kohlenstoffatomen oder Aryl ist. Die Arylgruppe ist vorzugsweise eine Arylgruppe mit 6 bis 24 Kohlenstoffatomen, die optional substituiert sein kann. Bevorzugt ist die Arylgruppe eine Phenylgruppe. Insbesondere bevorzugt ist R Alkyl mit 1 bis 3 Kohlenstoffatomen. Der durch R₁₀ und R₁₁ gebildete Ring kann ein gesättigter oder ungesättigter Ring mit oder ohne Heteroatome sein. Bevorzugt ist dieser Ring ein 3- bis 12-gliedriger Ring, insbesondere bevorzugt ein 5- bis 8-gliedriger Ring. Weiter bevorzugt ist dieser Ring ein gesättigter Ring ohne Heteroatom. Insbesondere bevorzugt ist ein C₆-Ring.

Weiter bevorzugt sind Carbonateinheiten auf Grundlage von Dioxydiphenylalkanen, wie Bisphenol A, Bisphenol B, Bisphenol F, halogenierten Bisphenolen, wie 3,3',5,5'-Tetrachlor- oder 3,3',5,5'-Tetrabrombisphenol A, oder alkylierten Bisphenolen, wie 3,3',5,5'-Tetramethylbisphenol A. Insbesondere bevorzugt sind Carbonateinheiten auf der Grundlage von Bisphenol A und Bisphenol F.

Solche Verbindungen haben bevorzugt ein Molekulargewicht von weniger als 50.000, besonders bevorzugt von 1.000 bis 30.000 und insbesondere bevorzugt von 5.000 bis 20.000.

Umfaßt die Verbindung mit mindestens zwei Carbonateinheiten noch weitere, wie oben definierte Einheiten, so sind diese bevorzugt unter den folgenden ausgewählt:

Amideinheiten: Amideinheiten, abgeleitet von PA 6, PA 11, PA 12, PA 6,6, PA 6,10, PA 6,11, PA 6,12, PA 6,6/6, PA 4,6 PA 6-T, PA 6,6-T, Trogamiden (Creanova), teilaromatischen Polyamiden sowie den entsprechenden Copolyamiden, Mischungen von Polyamiden und thermoplastisch verarbeitbaren Aramiden. Bevorzugt sind Amideinheiten abgeleitet von PA 6 und PA 6,6.
Estereinheiten: Estereinheiten, abgeleitet von aliphatischen, aromatischen oder gemischt aromatisch/aliphatischen Polyestern, wie PET, PBT, PDCT, PCL, PHB, Polymilchsäure, Polytetramethylenadipat, Poly(4-hydroxybenzoesäure) und Polykondensaten aus Bisphenol A und Phthalsäuren. Bevorzugt sind Estereinheiten abgeleitet von gemischt aromatisch/aliphatischen Polyestern. Ethereinheiten: Ethereinheiten, abgeleitet von Polyethem, wie Polyalkylenglykolen ( PEG, PPG, Polyepichlohydrine), Epoxyharzen, Polytetrahydrofuranen, Polyoxetanen, Polyphenylethern, Polyarylethern ( Poly(oxy-2,6-dimethyl-p-phenylen), Poly(oxy-2,6-diphenyl-p-phenylen)) oder Polyetheretherketonen. Bevorzugt sind Ethereinheiten abgeleitet von Polyalkylenglykolen.

Esteramid- bzw. Etheresteramideinheiten: Abgeleitet von den oben genannten Amid-, Ester- und Ethereinheiten.

Umfaßt die Verbindung mit mindestens zwei Carbonateinheiten ssolche Einheiten, so liegen diese bevorzugt in Form von Blöcken vor. Diese Blöcke haben vorzugsweise ein Molgewicht von weniger als 50.000, besonders bevorzugt von 30.000 bis 1.000 und insbesondere bevorzugt von 5.000 bis 20.000.

Bevorzugt ist das erfindungsgemäß verwendete Additiv ein Blockcopolymer vom ABoder A[BA]_{n≥1}-Typ. Dabei stellt A einen Carbonatblock und B einen Nichtcarbonatblock dar. Vorzugsweise wird als Block B ein Oligo- oder Polyamidblock und/oder ein Oligooder Polyesterblock und/oder ein Oligo- oder Polyetherblock und/oder ein Oligo- oder Polyetheresteramidblock und/oder ein Oligo- oder Polyesteramidblock oder Gemische oder (Block-)Copolymere davon eingesetzt. Beispiele und bevorzugte Ausführungsformen davon sind vorstehend beschrieben. Vorzugsweise ist n in dieser Formel 1 bis 3.

Dabei ist das Verhältnis von A zu B vorzugsweise 99:1 bis 5:95, insbesondere bevorzugt 95:5 bis 20:80, bezogen auf das Gewicht. Der Block B, der nicht aus Carbonateinheiten besteht, hat vorzugsweise eine Molmasse im Bereich von weniger als 50.000, besonders bevorzugt im Bereich von 30.000 bis 1.000, insbesondere bevorzugt im Bereich von 20.000 bis 5.000.

Besonders bevorzugt ist der Block B ein Oligo- oder Polyamidblock, insbesondere aus Polyamid 6, vorzugsweise mit einem Molekulargewicht von 20.000 bis 10.000.

Der Carbonatblock A umfasst erfindungsgemäß mindestens zwei Carbonateinheiten, die aliphatisch, aromatisch oder aliphatisch-aromatisch sein können. Vorzugsweise hat dieser Block eine Molmasse von unter 50.000, besonders bevorzugt von 1.000 bis 30.000 und insbesondere bevorzugt von 5.000 bis 20.000. Erfindungsgemäß sind sowohl Blöcke aus nur einem Typ an Carbonateinheiten als auch Blöcke aus mehr als einem Typ an Carbonateinheiten geeignet, wie beispielsweise Einheiten auf Grundlage von Verbindungen der Formel 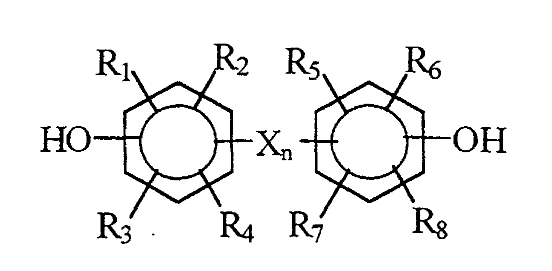 wobei
n 0 oder 1 ist;
X -O-; -S-; -S-S-; -SO-; -SO₂-; -SO₂-NR₁₂-; -CO-; -CO-O-;
-CO-NH-; -CH₂-; -C(CH₃)₂-; -NR₉-; -C(CF₃)₂- oder -CR₁₀R₁₁- bedeutet;
R₁ bis R₈, jeweils unabhängig, H, Alkyl oder Halogen bedeuten;
R₉ H, Alkyl oder Acyl bedeutet; wobei R₁₀ und R₁₁ miteinander unter Bildung eines Ringes verbunden sind und R₁₂ Alkyl oder Acyl bedeutet.

Die Alkylgruppe ist vorzugsweise eine Gruppe mit 1 bis 6 Kohlenstoffatomen, insbesondere bevorzugt mit 1 bis 3 Kohlenstoffatomen. Diese Gruppen können optional substituiert sein. Bevorzugte Beispiele von Substituenten sind Halogene (Cl, Br, F, I) und Alkoxygruppen mit 1 bis 3 Kohlenstoffatomen.

Die Acylgruppe (-COR) ist vorzugsweise eine Acylgruppe, in der R H, Alkyl mit 1 bis 5 Kohlenstoffatomen oder Aryl ist. Die Arylgruppe ist vorzugsweise eine Arylgruppe mit 6 bis 24 Kohlenstoffatomen, die optional substituiert sein kann. Bevorzugt ist die Arylgruppe eine Phenylgruppe. Insbesondere bevorzugt ist R Alkyl mit 1 bis 3 Kohlenstoffatomen. Der durch R₁₀ und R₁₁ gebildete Ring kann ein gesättigter oder ungesättigter Ring mit oder ohne Heteroatome sein. Bevorzugt ist dieser Ring ein 3- bis 12-gliedriger Ring, insbesondere bevorzugt ein 5- bis 8-gliedriger Ring. Weiter bevorzugt ist dieser Ring ein gesättigter Ring ohne Heteroatom. Insbesondere bevorzugt ist ein C₆-Ring. Die Arylgruppe ist vorzugsweise eine Arylgruppe mit 6 bis 24 Kohlenstoffatomen, die optional substituiert sein kann. Bevorzugt ist die Arylgruppe eine Phenylgruppe.

Bevorzugte Beispiele von Carbonateinheiten sind Oligo- und Polycarbonatblöcke von Dioxydiphenylalkanen, wie Bisphenol A, Bisphenol B, Bisphenol F, halogenierten Bisphenolen, wie 3,3',5,5'-Tetrachlor- oder 3,3',5,5'-Tetrabrombisphenol A, oder alkylierten Bisphenolen, wie 3,3',5,5'-Tetramethylbis-phenol A. Bevorzugt sind dabei Blöcke aus Bisphenol A und/oder Bisphenol F.

Die Verbindung mit mindestens zwei Carbonateinheiten hat vorzugsweise einen Schmelzindex, der vergleichbar oder höher als der Schmelzindex der aufzukondensierenden Oligo- und/oder (Co-)Polyamide ist. Dies ermöglicht eine gute und gleichmäßige Verteilung der Verbindung mit mindestens zwei Carbonateinheiten in der Schmelze. Bevorzugt hat die Verbindung mit mindestens zwei Carbonateinheiten einen Schmelzindex im Bereich von 10 bis 350, insbesondere bevorzugt von 20 bis 300, jeweils bei vergleichbaren Meßbedingungen von beispielsweise 240°C; 2,16 kg für Polyamid-6.

In dem erfindungsgemäßen Verfahren können weiterhin die üblichen Zuschlagstoffe verwendet werden, die bei der Herstellung von Polyamidprodukten Verwendung finden. Illustrative Beispiele davon sind Färbemittel, Flammverzögerer und -schutzmittel, Stabilisatoren, Füllstoffe, Gleitfähigkeitsverbesserer, Formentrennmittel, Schlagzähmodifikatoren, Kristallisationsbeschleuniger, Antistatika, Schmiermittel, Verarbeitungshilfsmittel sowie weitere Polymere, die mit Polyamiden üblicherweise compoundiert werden.

Beispiele dieser Zuschlagstoffe sind wie folgt:

Färbemittel: Titandioxid, Bleiweiß, Zinkweiß, Liptone, Antimonweiß, Ruß, Eisenoxidschwarz, Manganschwarz, Kobaltschwarz, Antimonschwarz, Bleichromat, Mennige, Zinkgelb, Zinkgrün, Cadmiumrot, Kobaltblau, Berliner Blau, Ultramarin, Manganviolett, Cadmiumgelb, Schweinfurter Grün, Molybdänorange und -rot, Chromorange und-rot, Eisenoxidrot, Chromoxidgrün, Strontiumgelb, Molybdänblau, Kreide, Ocker, Umbra, Grünerde, Terra di Siena gebrannt und Graphit. Flammverzögerer und Flammschutzmittel: Antimontrioxid, Hexabromcyclododecan, Tetrachlor- oder Tetrabrombisphenol und halogenierte Phosphate, Borate, Chlorparaffine, roter Phosphor.

Stabilisatoren: Metallsalze, insbesondere Kupfersalze und Molybdänsalze, Kupferkomplexe.

Füllstoffe: Glasfasern, Glaskugeln, Kieselgur, Talkum, Kaolin, Tone, CaF₂, CaCO₃ und Aluminiumoxide.

Gleitfähigkeitsverbesserer und Schmiermittel: MoS₂, Paraffine, Fettalkohole, Stearate, Fettsäureamide.

Formentrennmittel und Verarbeitungshilfsstoffe: Wachse (Montanate), Montansäurewachse, Montanesterwachse, Polysiloxane, Stearate, Polyvinylalkohol, SiO₂, Calciumsilikate.

Schlagzähmodifikatoren: Polybutadien, EPM, EPDM, HDPE.

Antistatika: Ruß, mehrwertige Alkohole, Fettsäureester, Amine, Säureamide, quartemäre Ammoniumsalze.

Diese Zuschlagstoffe können in den üblichen, dem Fachmann bekannten Mengen verwendet werden.

Das in dem erfindungsgemäßen Verfahren erhaltene aufkondensierte Produkt kann entweder in Form von Granulat bis zur endgültigen Verwendung gelagert oder direkt zu den entsprechenden Endprodukten umgesetzt werden. Da das erhaltene Granulat ohne Probleme und ohne Abfall der mechanischen Kennwerte erneut extrudiert werden kann, ist eine Zwischenlagerung ohne Nachteil. Die direkte Verarbeitung zu den Endprodukten und die spätere Verarbeitung zu den entsprechenden Endprodukten erfolgt mit den üblichen, dem Fachmann gut bekannten Vorrichtungen und Verfahren, wie sie beispielsweise in A. Echte, Handbuch der Technischen Polymerchemie, VCH-Verlagsgesellschaft mbH, Weinheim, 1993, in Polymere Werkstoffe, herausgegeben von H. Batzer, Georg Thieme Verlag, Stuttgart, 1984 und in Ullmanns Encyklopädie der technischen Chemie, Band 15, Verlag Chemie, Weinheim, 1978 beschrieben sind.

Die erfindungsgemäß aufkondensierten Polyamide zeichnen sich, insbesondere bei Polyamid-6, durch überraschend gute Schlagzähigkeit aus. Gleichzeitig ist eine erneute Extrusion, beispielsweise von Faserabfall, ohne zusätzliche Gabe von Additiv möglich, wobei kein Absinken wichtiger mechanischer Kennwerte auftritt. So wird weder die Zugfestigkeit, Biegefestigkeit, Reißdehnung noch der E-Modul nachteilig beeinflußt.

Da über die Zugabemenge der Verbindung mit mindestens zwei Carbonateinheiten und die Verfahrensparameter die Eigenschaften des aufkondensierten Polyamids über einen weiten Bereich variiert werden können, sind die erhaltenen Polyamide in vielen Bereichen einsetzbar.

Zum Beispiel können die Polyamide zum Faserspinnen verwendet werden mit dem Vorteil, daß anfallender Faserabfall ohne weitere Aufarbeitung recycliert werden kann. Auch Folienblasen und Folienpressen ist mit den erfindungsgemäß aufkondensierten Polyamiden möglich.

Es ist aber auch möglich, das erfindungsgemäße Verfahren so auszugestalten, daß die erhaltenen Polyamide durch Spritzguß geformt werden können, wodurch Formteile mit sehr guten mechanischen Eigenschaften erhalten werden.

Das erfindungsgemäße Verfahren erlaubt weiter die Erzeugung eines strukturviskosen Verhaltens in Polyamidschmefzen.

Strukturviskosität (weitere Bezeichnungen: Pseudoplastizität, Scherentzähung) ist eine Bezeichnung aus der Rheologie, unter der man eine der Dilatanz entgegengesetzte Erscheinung versteht. Dabei nimmt die Viskosität von fließenden Stoffen unter dem Einfluss zunehmender Schubspannung oder Schergeschwindigkeit ab. Die Viskositätsabnahme beruht auf der gleichmäßigen Ausrichtung der vorher ungeordneten Molekülknäuel unter dem Einfluss der zunehmenden Schubspannung (Römpp Chemie Lexikon, 9. Auflage, Georg Thieme Verlag, Stuttgart, New York, 1992).

Im erfindungsgemäßen Verfahren wird durch die Verbreiterung der Molmassenverteilung bei der Aufkondensierung der Polyamide ein strukturviskoses Fließen in der Schmelze in Verarbeitungsprozessen, wie z.B. bei der Halbzeug- und Profilextrusion sowie beim Spritzgießen, erreicht Mit steigender Schergeschwindigkeit sinkt die Schmelzviskosität, was gleichzeitig eine Senkung des Druckverlustes darstellt. Rheologisch ist unter hohen Schergeschwindigkeiten kein bzw. kaum ein Unterschied zu unmodifizierten Polyamiden feststellbar. Daher können für die Formgebung die üblichen Vorrichtungen und Modifikationen verwendet werden. Mit Absenkung der Schergeschwindigkeit, z.B. im Werkzeug, wirkt sich dagegen die höhere Schmelzviskosität vorteilhaft aus, da eine bessere Formgebung von Polyamiderzeugnissen erreicht werden kann.

Somit geht die Verbesserung der mechanischen Eigenschaften der erfindungsgemäß aufkondensierten Polyamide einher mit einer weiteren Verbesserung der Verfahrensführung zur Formgebung.

Die Variabilität des Verfahrens erlaubt aber auch die Herstellung von Polyamiden, die zum Tiefziehen, Profilextrudieren, Folienextrudieren und Blasformen geeignet sind.

Femer sind die Additiv-Verbindungen in Form der Blockcopolymere, hier als erfindungsgemäß verwendbare Additive beschrieben, zur Kompatibilisierung von Polymerblends geeignet. Erfindungsgemäße Additive vom Blockcopolymertyp, z.B. vom AB-Typ oder vom A[BA]_{n≥1}-Typ, können zur Kompatibilisierung von Polymerblends aus Polymeren vom Typ A und Polymeren des Typs B verwendet werden.

Die Definitionen der Polymere vom Typ A bzw. vom Typ B sind hier wie oben für die Additive beschrieben. Alle bevorzugten Ausführungsformen der Additiv-Verbindungen, beschrieben im Zusammenhang mit dem Aufkondensieren von Polyamiden, sind auch hier bevorzugt.

Auch das erfindungsgemäße Additiv enthaltend mindestens ein Strukturelement der Formel (I), so wie es hier in der Anmeldung beschrieben ist, einschließlich aller bevorzugten Varianten, ist für die Verwendung zur Kompatibilisierung von Polymerblends geeignet.

Zum Beispiel eignet sich ein Additiv der Formel (I), (I-a) bzw. (II), in dem ein Polyamidblock mit einem Polycarbonatblock verknüpft ist, zur Kompatibilisierung von Polyamid-Polycarbonat-Blends. Das erfindungsgemäße Additiv sorgt hier nicht für eine Aufkondensierung der Polyamidkomponente, sondern dient der Grenzphasenmodifizierung der im Prinzip unverträglichen Blendpolymere, wodurch verbesserte Materialeigenschaften, wie die Erhöhung der Zugfestigkeit bei gleichzeitiger Verbesserung der Fließfähigkeit der Schmelze (Erhöhung des Schmelzindex, vorteilhaft für kürzere Zykluszeiten beim Spritzgießen bzw. für höhere Durchsätze in Extrusionsprozessen), erhalten werden.

Ebenso ist ein Einsatz als Schmelzkleber möglich.

Das erfindungsgemäße Verfahren wird in den üblichen Kunststoffverarbeitungsvorrichtungen durchgeführt, die dem Fachmann gut bekannt sind. Diese Vorrichtungen sind Schmelzemischer und schließen Einwellen- und Doppelschneckenextruder, wobei die zwei Schnecken sich gleich oder gegenläufig drehen können, Schmelze-Knetwerkzeuge, wie Banbury-Mischer, Buss-Kneter und Planetwalzenextruder, ein. Vorzugsweise wird das Verfahren jedoch in gut mischenden Extrudem durchgeführt. Die dabei nötigen Verfahrensparameter und die spezifischen Ausgestaltungen der Vorrichtungen hängen von der Art der Ausgangsstoffe und den erwünschten Ergebnissen und Endprodukten ab, sind aber dem Fachmann gut bekannt.

Das erfindungsgemäße Verfahren kann so ausgestaltet sein, daß die mindestens eine Verbindung mit mindestens zwei Carbonateinheiten entweder direkt mit den aufzukondensierenden Oligo- und/oder (Co-)Polyamiden vorgemischt, aufgeschmolzen und zur Reaktion gebracht wird oder erst nach dem Aufschmelzen der Oligo- und/oder (Co-)Polyamide zu einem späteren Zeitpunkt zudosiert wird. Weiterhin ist es möglich, die mindestens eine Verbindung mit mindestens zwei Carbonateinheiten entweder als reine Substanz oder in Form eines Master-Batch einzusetzen. Die jeweiligen Ausgestaltungen des Verfahrens sind dem Fachmann geläufig und bieten die folgenden Vorteile.

Bei einer sofortigen Zumischung der Verbindung mit mindestens zwei Carbonateinheiten wird eine gute Durchmischung erreicht. Eine spätere Zudosierung ermöglicht es beispielsweise, zunächst weitere Zuschlagstoffe mit der weniger viskosen Schmelze der Oligo- und/oder (Co-)Polyamide gut zu mischen. Erst anschließend erfolgt die Aufkondensierung und damit die Zunahme der Viskosität der Mischung, was aber keinen nachteiligen Effekt auf die Homogenität der Verteilung der Zuschlagstoffe hat. Dies ist insbesondere vorteilhaft, wenn partikelförmige Füllstoffe eingearbeitet werden sollen.

Im Fall der Einarbeitung von Glasfasern ist es allerdings bevorzugt, die mindestens eine Verbindung mit mindestens zwei Carbonateinheiten gleichzeitig mit den Glasfasern in die schon aufgeschmolzene Mischung zu geben. Dies stellt zum einen sicher, daß die Glasfasern nicht übermäßig mechanisch beansprucht und dabei zerstört werden, gleichzeitig kann durch die zügige, aber nicht zu schnelle Aufkondensationsreaktion sichergestellt werden, daß die Glasfasern gleichmäßig in der aufgeschmolzenen Masse verteilt werden.

Die Eindosierung des Additivs in Form eines Master-Batch ermöglicht eine genauere Dosierung des Additivs, da größere Mengen verwendet werden. Das Master-Batch umfaßt bevorzugt als Matrixmaterial das Polyamid, das auch in dem Verfahren aufkondensiert wird, es ist aber nicht darauf beschränkt. Die Konzentration des Additivs im Master-Batch beträgt vorzugsweise 1 bis 50 Gew.-%, stärker bevorzugt 5 bis 25 Gew.-% und insbesondere bevorzugt 10 bis 15 Gew.-%, bezogen auf das Gesamtgewicht des Master-Batch. Darüberhinaus kann das Master-Batch auch noch weitere Zuschlagstoffe enthalten, wie sie beispielsweise oben beschrieben worden sind.

Die Herstellung eines solchen Master-Batch erfolgt in der üblichen Art und Weise, die dem Fachmann geläufig ist.

Insbesondere bevorzugt wird in dem erfindungsgemäßen Verfahren zusätzlich ein Diund/oder Polyamin und/oder NH₂-terminiertes Oligoamid mit einem Molekulargewicht von kleiner als 10.000, bevorzugt von 2.000 bis 500 eingesetzt. Vorzugsweise wird diese Verbindung vor der Zudosierung der Verbindung mit mindestens zwei Carbonateinheiten eingesetzt. Die Art dieser Verbindung ist nicht beschränkt; wesentlich sind die Aminogruppen bzw. die NH₂-Endgruppen. Vorzugsweise ist diese Verbindung jedoch ein Oligoamid, das in seiner Struktur dem herzustellenden Polyamid entspricht.

Die Zugabemenge des zusätzlichen Di- und/oder Polyamids und/oder NH₂-terminierten Oligoamids beträgt 0,1 bis 10 Gew.-%, vorzugsweise 1 bis 3 Gew.-%, bezogen auf die Menge an eingesetztem Oligo- und/oder (Co-)Polyamid. Die Zugabe dieser speziellen Verbindung führt zu einer weiter verbesserten Aufkondensationsreaktion.

Weiterhin stellt die vorliegende Erfindung die Verwendung mindestens einer Verbindung mit mindestens zwei Carbonateinheiten zur Aufkondensierung von Oligo- und/oder (Co-)Polyamiden zur Verfügung. Bevorzugte Ausführungsformen dieser Verwendung ergeben sich aus dem oben gesagten.

Weiterhin stellt die vorliegende Erfindung ein Additiv zur Aufkondensierung von Oligound/oder (Co-)Polyamiden zur Verfügung, das ein Strukturelement der Formel (1) enthält:

**⁅P-L-CE**^{**1**}**-CE**^{**2**}**⁆ (I)**

In dieser Formel bedeutet P einen Block, ausgewählt aus einem Oligo- oder Polyamidblock, einem Oligo- oder Polyesterblock, einem Oligo- oder Polyetherblock, einem Oligo- oder Polyetheresteramidblock und einem Oligo- oder Polyesteramidblock oder Mischungen davon oder (Block-)Copolymerblöcke davon. Beispiele und bevorzugte Ausführungsformen davon sind vorstehend im Zusammenhang mit dem erfindungsgemäßen Verfahren ausgeführt.

CE¹ und CE² stellen jeweils eine Carbonateinheit dar, die gleich oder verschieden sein kann. L stellt eine Verbindungsguppe dar, ausgewählt aus zweiwertigen organischen Gruppen und einer Einfachbindung.

CE¹ und CE² werden unter Carbonateinheiten gewählt, die auf Grundlage der folgenden Verbindungen hergestellt werden können: 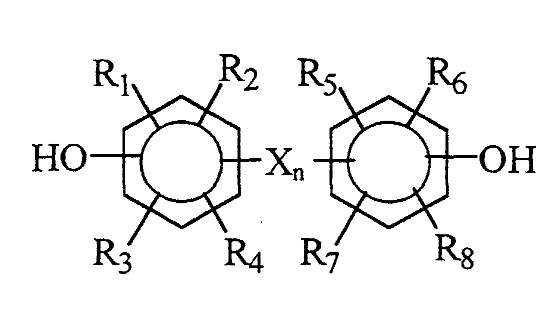 wobei
n 0 oder 1 ist;
X -O-; -S-; -S-S-; -SO-; -SO₂-; -SO₂-NR₁₂-; -CO-; -CO-O-;
-CO-NH-; -CH₂-; -C(CH₃)₂-; -NR₉-; -C(CF₃)₂- oder -CR₁₀R₁₁- bedeutet;
R₁ bis R₈, jeweils unabhängig, H, Alkyl oder Halogen bedeuten;
R₉ H, Alkyl oder Acyl bedeutet; wobei R₁₀ und R₁₁ miteinander unter Bildung eines Ringes verbunden sind und R₁₂ Alkyl oder Acyl bedeutet.

Die Alkylgruppe ist vorzugsweise eine Gruppe mit 1 bis 6 Kohlenstoffatomen, insbesondere bevorzugt mit 1 bis 3 Kohlenstoffatomen. Diese Gruppen können optional substituiert sein. Bevorzugte Beispiele von Substituenten sind Halogene (Cl, Br, F, I) und Alkoxygruppen mit 1 bis 3 Kohlenstoffatomen.
Die Acylgruppe (-COR) ist vorzugsweise eine Acylgruppe, in der R H, Alkyl mit 1 bis 5 Kohlenstoffatomen oder Aryl ist. Die Arylgruppe ist vorzugsweise eine Arylgruppe mit 6 bis 24 Kohlenstoffatomen, die optional substituiert sein kann. Bevorzugt ist die Arylgruppe eine Phenylgruppe. Insbesondere bevorzugt ist R Alkyl mit 1 bis 3 Kohlenstoffatomen. Der durch R₁₀ und R₁₁ gebildete Ring kann ein gesättigter oder ungesättigter Ring mit oder ohne Heteroatome sein. Bevorzugt ist dieser Ring ein 3- bis 12-gliedriger Ring, insbesondere bevorzugt ein 5- bis 8-gliedriger Ring. Weiter bevorzugt ist dieser Ring ein gesättigter Ring ohne Heteroatom. Insbesondere bevorzugt ist ein C₆-Ring. Die Arylgruppe ist vorzugsweise eine Arylgruppe mit 6 bis 24 Kohlenstoffatomen, die optional substituiert sein kann. Bevorzugt ist die Arylgruppe eine Phenylgruppe.

Bevorzugt sind Dioxydiphenylalkane, wie Bisphenol A, Bisphenol B, Bisphenol F, halogenierte Bisphenole, wie 3,3',5,5'-Tetrachlor- oder 3,3',5,5'-Tetrabrombisphenol A, oder alkylierte Bisphenole, wie 3,3',5,5'-Tetramethylbisphenol A. Bevorzugt sind dabei Carbonateinheiten auf Grundlage von Bisphenol A oder Bisphenol F. Vorzugsweise sind CE¹ und CE² gleich.

Beispiele von zweiwertigen organischen Gruppen für L sind -COO-, -CO-, -O-, -NR-, -NHCOO-, -NHCONH-, -N(COR)-, wobei R eine Alkyl- oder Arylgruppe darstellt, - CONH- und -(CH₂)ₙ- mit n gleich 1 bis 5. Bevorzugt ist L eine -COO- Gruppe.

Das erfindungsgemäße Additiv wird vorzugsweise zur Aufkondensierung von Oligound/oder (Co-)Polyamiden verwendet, insbesondere in dem oben beschriebenen Verfahren.

Vorzugsweise umfaßt das Additiv der Erfindung noch einen Oligo- oder Polycarbonatblock (PCB), verbunden mit dem Strukturelement der Formel (I) durch CE².

**⁅P-L-CE**^{**1**}**-CE**^{**2**}**⁆PCB (Ia)**

Im Hinblick auf das Molekulargewicht der einzelnen Blöcke, deren chemische Natur, sowie die Konstitution der Carbonateinheiten gilt das oben, im Zusammenhang mit dem Verfahren ausgeführte.

Weist das erfindungsgemäße Additiv auch einen Oligo- oder Polycarbonatblock auf, so liegen Oligo- oder Polycarbonatblock und P in einem Verhältnis von 99:1 bis 5:95, vorzugsweise von 70:30 bis 30:70, stärker bevorzugt von 60:40 bis 40:60 und insbesondere von 50:50 vor, bezogen auf das Gewicht. Vorzugsweise ist das erfindungsgemäße Additiv eine Verbindung, in der P einen Oligo- oder Polyamidblock und L -COO- darstellt. Insbesondere bevorzugt weist dieses Additiv auch einen Oligooder Polycarbonatblock auf. Der Oligo- oder Polyamidblock ist vorzugsweise ein Oligooder Polyamid-6-Block.

Dieses bevorzugte Additiv kann, entgegen den Angaben im Stand der Technik, durch Reaktion eines Polyamids mit -COOH-Gruppen mit einem Polycarbonat erhalten werden. Die Herstellung kann beispielsweise in einem Extruder unter den folgenden Reaktionsbedingungen erfolgen:

Ein Polycarbonat (PC) wird aufgeschmolzen (ca. 250 bis 300°C). Zur Schmelze wird ein Polyamid mit COOH-Gruppen (COOH-PA) zudosiert. Das Gewichtsverhältnis (PC) zu (COOH-PA) beträgt bevorzugt 10:90 bis 90:10, besonders bevorzugt 30:70 bis 70:30, insbesondere bevorzugt 55:45 bis 45:55 und am meisten bevorzugt 50:50. Dabei wird das (COOH-PA) aufgeschmolzen und reagiert mit dem (PC). Das durch diesen reaktiven Blendprozeß gebildete Additiv kann z.B. als Strang abgezogen, gekühlt, granuliert und getrocknet werden.

Das so erhaltene Additiv kann durch die Formel

**PA(̵COO-PC)**_{**n≥1**} **(II)**

dargestellt werden. Da die Einheit PC', die aus dem eingesetzten Polycarbonat PC stammt, eine Vielzahl von Carbonateinheiten umfaßt, ist die erfindungsgemäße Bedingung der Gegenwart zweier Carbonateinheiten erfüllt. Diese sind daher nicht mehr einzeln aufgeführt; es ist jedoch offensichtlich, daß obige Formeln unter die Formel (I) fällt.

In der Formel (II) können mit einem Polyamid mehrere Polycarbonatblöcke verbunden sein, da das Polyamid mit -COOH-Gruppen mehrere dieser Gruppen pro Molekül enthalten kann. Vorzugsweise ist n in Formel (II) von 1 bis 3, insbesonders bevorzugt 2.

Als Polycarbonat kann bei der oben beschriebenen Reaktion irgendein Polycarbonat verwendet werden, vorzugsweise ein Polycarbonat, abgeleitet von den im Zusammenhang mit CE1 und CE2 beschriebenen Ausgangsverbindungen. Vorzugsweise ist das Polycarbonat ein Polycarbonat aus Bisphenol A oder Bisphenol F.

Das Polycarbonat hat vorzugsweise eine Molmasse von 10.000 bis 30.000, insbesondere bevorzugt von 18.000 bis 24.000 und am meisten bevorzugt 20.000.

Als Polyamid zur Herstellung des Additivs kann irgendein Polyamid eingesetzt werden. Illustrative Beispiele sind vorstehend beschrieben. Bevorzugt ist das Polyamid ein Polyamid 6. Das Polyamid hat vorzugsweise ein Molekulargewicht von 5.000 bis 30.000, stärker bevorzugt von 10.000 bis 20.000 und insbesondere bevorzugt von 12.000 bis 17.000. Das Herstellen von -COOH-Gruppen in dem Polyamid kann durch bekannte Verfahren sichergestellt werden. Beispielsweise kann ein Polyamid mit einem Säureanhydrid, wie Trimellitsäureanhydrid, oder mit einer freien Säure, wie Adipinsäure, in der Schmelze umgesetzt werden.

Bei der Herstellung des erfindungsgemäßen Additivs ist es möglich, konventionelle Umesterungskatalysatoren einzusetzen. Beispiele davon sind Natriumbisphenolat, Kaliumbisphenolat und die weiteren, dem Fachmann bekannten üblichen Verbindungen. Dieses Additiv kann in reiner Form oder in Form eines Master-Batch verwendet werden. Die dazu nötigen Vorrichtungen und Verfahren sind dem Fachmann bekannt und oben bereits ausgeführt.

Das erfindungsgemäße Additiv kann insbesondere vorteilhaft bei der Verarbeitung von Polyamid 4.6 verwendet werden. Polyamid 4.6 hat einen für Polyamide sehr hohen Schmelzpunkt (>290°) und gleichzeitig ein sehr enges Verarbeitungsfenster. D.h. für die Verarbeitung steht nur ein sehr enger Temperaturbereich zur Verfügung, in dem ohne Zersetzungserscheinungen Polyamid 4.6 verarbeitet werden kann. Die dafür erforderliche strikte Kontrolle der Verfahrensparameter während der Verarbeitung ist aufwendig und kostenintensiv.

Überraschend hat sich gezeigt, daß der Einsatz des erfindungsgemäßen Additivs bei der Verarbeitung von Polyamid 4.6 dazu führt, daß das Verarbeitungsfenster deutlich verbreitet werden kann.

Da der Zusatz des erfindungsgemäßen Additivs die Eigenschaften des Polyamid 4.6 nicht nachteilhaft beeinflußt, wird die Verarbeitung von Polyamid 4.6 erheblich vereinfacht. Eher kann mit einer Verbesserung von Materialeigenschaften gerechnet werden.

Die vorliegende Erfindung wird durch die folgenden Beispiele weiter beschrieben.

### Beispiel I: Herstellung eines erfindungsgemäßen Additivs

I.1: Ein erfindungsgemäßes Additiv wird hier in einem zweistufigen Verfahren hergestellt; die Herstellung kann jedoch auch in einem einstufigen Verfahren (siehe I.3) erreicht werden.

### Stufe 1: Herstellung eines Polyamid 6 mit COOH Gruppen

4 kg/h (Durchsatz) eines Polyamid 6 wurden mit 52 g/h (Durchsatz) Trimellitsäureanhydrid in einem ZSK-30 Zweischneckenextruder bei 270°C und 100 U/min modifiziert. Das modifizierte Polyamid 6 mit einer mittleren Molmasse von 15.000 und zwei COOH-Endgruppen pro Molekül wurde als Strang abgezogen, im Wasserbad gekühlt, granuliert und getrocknet.

### Stufe 2: Additivherstellung durch reaktives Extrudieren

2 kg/h Polycarbonat (Lexan 141/Handelsname) wurden im oben verwendeten Zweischneckenextruder bei 280°C aufgeschmolzen. In die Schmelze wurden 2 kg/h des oben hergestellten COOH-terminierten Polyamid 6 zudosiert. Das gebildete Additiv ( im folgenden M1251) wurde als Strang abgezogen, im Wasserbad gekühlt, granuliert und getrocknet.

I.2; In derselben Art und Weise wurden weitere erfindungsgemäße Additive hergestellt.

| COOH-terminiertes PA 6 | Polycarbonat Gewichtsverhältnis | |
|---|---|---|
| PA 6; Mw 15.000 | Lexan 141 | 50:50 (B4) |
| PA 6; Mw 10.000 | Lexan 141 | 50:50 (B5) |
| PA 6; Mw 5.000 | Lexan 141 | 70:30 (B6) |
| PA 6; Mw 5.000 | Lexan 141 | 50:50 (B7) |
| PA 6; Mw 5.000 | Lexan 141 | 30:70 (B8) |

I.3: Ein weiteres erfindungsgemäßes Additiv wurde in einem einstufigen Verfahren aus dem unter I.1 genannten Polyamid und Lexan 141 (Gewichtsverhältnis 50:50) unter direkter Zugabe von Adipinsäure hergestellt (B9). Die Verfahrensbedingungen entsprachen den oben für die 2.Stufe geschilderten.

### Beispiel II: Aufkondensation von PA 6 und PA 6,6

In den folgenden Beispielen wurde die Abhängigkeit der Aufkondensation von verschiedenen Parametern untersucht. Wenn nicht anders angegeben, fanden die Versuche mit einem ZSK-30 Zweischneckenextruder statt. Die Verarbeitungsbedingungen waren die üblichen.

### Abhängigkeit der Aufkondensationsreaktion von der Additivkonzentration

Polyamid 6 und Polyamid 6,6 wurden bei einem Durchsatz von 8 kg/h in dem oben genannten Zweischneckenextruder mit gut mischenden, aber wenig scherenden Schnecken modifiziert. Als Vergleich ist jeweils eine Extrusion des reinen Polymeren angegeben. Als Kennwerte wurden jeweils Schmelzindex und Kerbschlagzähigkeit bestimmt. Die erhaltenen Meßwerte sind in der Tabelle 1 angegeben.

**TABELLE 1**

| PA6 + %M1251 | **KSZ** [kJ/m²] | **MFI** (290°C; 2,16 g) [g/10min] | PA 6,6 + x%M1251 | **KSZ** [kJ/m²] | **MFI** (290°C; 2,16 kg) [g/10min] |
|---|---|---|---|---|---|
| 0,0 | 14,4 | 30 | 0,0 | 10,0 | 116 |
| 0,5 | 14,3 | 22 | 0,5 | 9,9 | 90 |
| 1,0 | 14,9 | 12 | 1,0 | 9,5 | 73 |
| 1,5 | 15,9 | 10 | 1,5 | 9,4 | 75 |
| 2,0 | 15,9 | 7 | 2,0 | 9,3 | 63 |
| 4,0 | 16,0 | 4 | 4,0 | 9,5 | 37 |
| 6,0 | 17,3 | 3 | | | |
| KSZ: Kerbschlagzähigkeit | | | | | |
| MFI: Schmelzindex | | | | | |

Die Zugabe des erfindungsgemäßen Additivs bei der Aufkondensierung zeigt schon bei einer Zugabemenge von nur 0,5 %, bezogen auf das Polyamid, eine deutliche Aufkondensationsreaktion, was sich durch die Abnahme des Schmelzindex manifestiert. Mit steigendem Gehalt an Additiv nimmt der Schmelzindex weiter ab, was den weiteren Anstieg des Molekulargewichts dokumentiert.

Gleichzeitig steigt die Kerbschlagzähigkeit an, was insbesondere bei PA 6 eindeutig dokumentiert ist und einen zusätzlichen positiven Effekt ausmacht.

### Abhängigkeit der Aufkondensationsreaktion von den Verarbeitungsparametern

Polyamid 6 wurde bei drei verschiedenen Durchsätzen, zwei verschiedenen Temperaturen und mit zwei unterschiedlichen Schnecken (gut mischend und wenig scherend [Schnecke A] bzw. gut mischend und stärker scherend [Schnecke B]) aufkondensiert. Die Additivkonzentration (M1251) betrug jeweils 1 %. Als Vergleich sind jeweils die korrepondierenden Versuche ohne Additiv angegeben. Als Kennwerte wurden wiederum die Kerbschlagzähigkeit und der Schmelzindex bestimmt. Die erhaltenen Meßergebnisse sind in der Tabelle 2 angegeben.

Der variierende Durchsatz repräsentiert dabei eine Variation der Reaktionszeit, da bei steigendem Durchsatz die Verweilzeit und damit die zur Reaktion zur Verfügung stehende Zeit verkürzt wird.

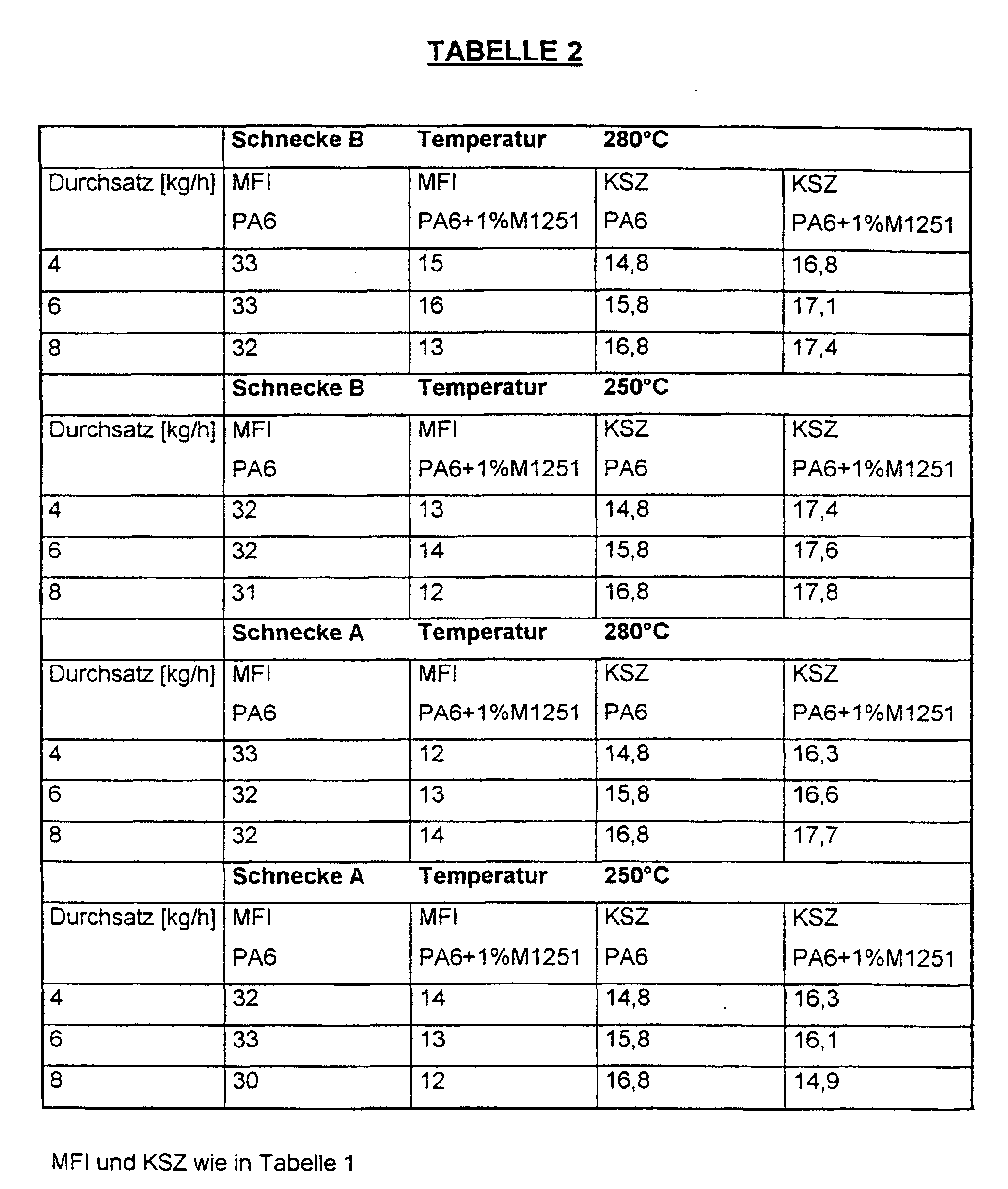

Die Ergebnisse demonstrieren, daß das erfindungegemäße Additiv über ein weites Parameterfenster erfolgreich zur Aufkondensierung von Polyamiden eingesetzt werden kann. Dabei spielen die Verfahrensparameter keine wesentliche Rolle.

Dies ermöglicht insbesondere den Einsatz des Additivs, ohne daß eine kostspielige Umrüstung von Extrusionsanlagen notwendig wird.

Gleichzeitig wurde gezeigt, daß das erfindungsgemäße Additiv eine zügige Aufkondensation ermöglicht, da auch beim höchsten Durchsatz eine deutliche Molekulargewichtszunahme erreicht wird. Dabei traten Inhomogenitäten, wie Gele, nicht auf, wie Untersuchungen zur Lösungsviskosität und die Werte für die Kerbschlagzähigkeit zeigen. Stark inhomogene Proben würden verschlechterte Werte zeigen. Dies zeigt auch, daß das erfindungsgemäße Additiv keine Beeinflussung des Endproduktes über die Plazierung der Dosierungsstelle hervorruft.

### Einfluß der Mehrfachverarbeitung auf die aufkondensierten Polyamide

Polyamid 6 wurde in feuchter und trockener Form, mit und ohne Zusatz von Additiv mehrfach extrudiert. Als Kennwerte wurden erneut Schmelzindex und Kerbschlagzähigkeit bestimmt. Die erhaltenen Ergebnisse sind in Tabelle 3 angeführt. Die Extrusion wurde mit dem oben beschriebenen Extruder durchgeführt.

Stabile Produkteigenschaften, insbesondere MFI, bei mehrfacher Verarbeitung sind wichtig für Anwendungen der aufkondensierten Polyamide in Bereichen, in denen viel Polymerabfall in reiner Form anfällt. Dieser sollte möglichst ohne aufwendige Zwischenschritte wieder einsetzbar sein, um so die Kosten niedrig zu halten und Resourcen zu schonen.

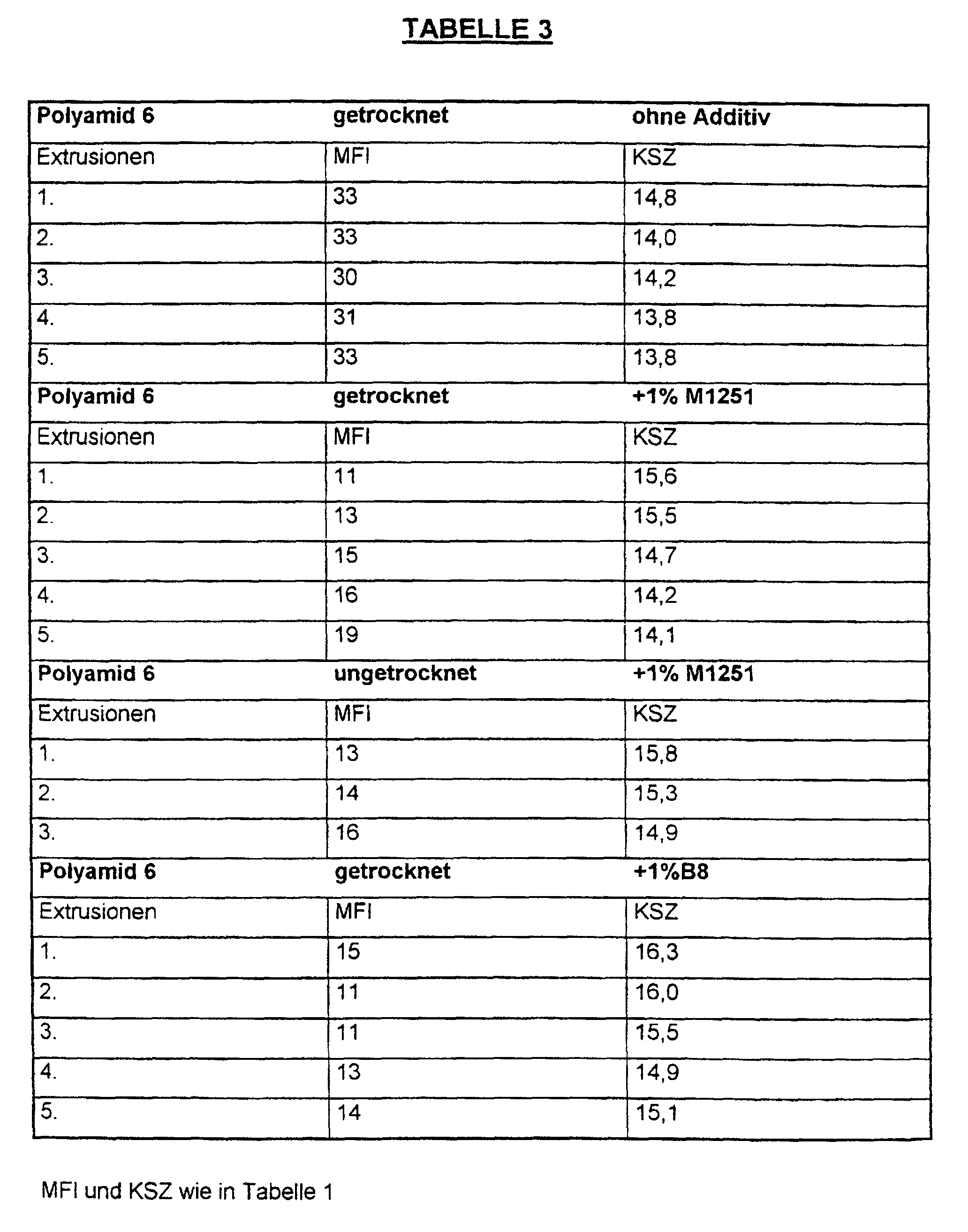

Der Versuch mit ungetrocknetem Polyamid 6 ohne Additiv ist nicht aufgeführt, da er das erwartete Ergebnis, Abnahme der Kerbschlagzähigkeit und Anstieg des Schmelzindex, zeigte.

Der Versuch mit getrocknetem Polyamid 6 ohne Additiv zeigt, daß sorgfältig getrocknetes Polyamid mehrfach extrudierbar ist. Eine solche Trocknung ist aber technisch nur sehr aufwendig durchführbar, zusätzlich treten dabei erhebliche Energiekosten auf. Gleichzeitig steigen dabei die Kosten erheblich an, da die entsprechenden Geräte zur Verfügung gestellt werden müssen.

Die erfindungsgemäßen Versuche zeigen, insbesondere der Versuch mit dem Additiv B, daß eine stabile Aufkondensierung erreicht wird. Die guten Kennwerte verändern sich bei mehrfacher Extrusion nur in einem tolerierbaren Rahmen und bleiben stabil in dem gewünschten Bereich.

Selbst bei Verarbeitung von ungetrocknetem Polyamid kann eine gute Aufkondensierung erreicht werden. Die mehrfache Extrusion führt nicht zu einem unakzeptablen Absinken der Kerbschlagzähigkeit. Diese ist nach dreifacher Extrusion immer noch besser als die des reinen Polyamids nach nur einer Extrusion.

### Einfluß der Additivzusammensetzung auf die Aufkondensationsreaktion

Polyamid 6 (Miramid PA 6; Handelsname) wurde mit den verschiedenen Additiven aus 1.1 und 1.2 modifiziert (Versuchsbedingungen wie bei der Evaluierung des Einflusses der Additivkonzentration). Die Ergebnisse der Schmelzindex- und Schlagzähigkeitsbestimmung sind in Tabelle 4 angegeben.

**TABELLE 4**

| **Zusammensetzung** | **MFI** | **KSZ** |
|---|---|---|
| Pa 6 | 27 | 14,4 |
| PA 6 + 1% B4 | 10 | 13,9 |
| PA 6 + 1% B5 | 11 | 13,8 |
| PA 6 + 1% B6 | 15 | 13,7 |
| PA 6 + 1% B7 | 13 | 14,1 |
| PA 6 + 1% B8 | 8 | 14,1 |
| PA 6 + 1% B9 | 10 | 15,1 |
| MFI und KSZ wie in Tabelle 1 | | |

Die Ergebnisse zeigen eindrucksvoll die Wirksamkeit der erfindungsgemäßen Additive. Insbesondere Additiv B8 zeigt aufgrund des hohen Carbonatanteils eine kostengünstige Variante auf. Additiv B9 zeigt, daß auch Additive, die in einem einstufigen Verfahren hergestellt wurden, erfolgreich zur Aufkondensierung verwendet werden können.

### Einfluß von Glasfasern, Verarbeitungshilfsmitteln, Verarbeitungsstabilisatoren und Antioxidantien auf die Aufkondensationsreaktion

Polyamid 6 (wie in den vorhergehenden Versuchen) wurde mit verschiedenen Zuschlagstoffen compoundiert und ohne Additiv, mit einem erfindungsgemäßen Additiv sowie einem Additiv des Standes der Technik verarbeitet. Als Kennwerte wurden der Schmelzindex (MFI), die Biegefestigkeit (BF), der b-Wert im CIELab-System (b) und die Schlagzähigkeit nach Charpy (SZC) bestimmt. Die erhaltenen Meßwerte sind in der folgenden Tabelle angegeben.

Die Eindosierung der Additive fand dabei, wenn nicht anders angegeben, gleich zu Beginn statt. Die Additive wurden als solche zudosiert.

Die Bestimmung der Schlagzähigkeit nach Charpy und des b-Wertes des ClELab-Systems wurden in Übereinstimmung mit den dafür geltenden Normbestimmungen durchgeführt.

**TABELLE 5**

| Rezeptur {Versuchsnummer} | SZC [kJ/m²] | BF [N/mm²] | MFI (270°C;5kg)[g/10min] | b |
|---|---|---|---|---|
| {1} PA6 +30%GF(A) +0,3%VAH | 59 | 225 | 60/57 | -0,2 |
| {2} PA6 +30%GF(A) +0,3%VAH +1,0%M1251 | 63 | 214 | 41/38 | 1,2 |
| {3} PA6 +30%GF(A) +0,3%VAH +0,2%VAS +1,0%M1251 | 61 | 246 | 27/23 | 2,4 |
| {4} PA6 +30%GF(A) +0,3%VAH +0,2%AX +1%M1251 | 61 | 240 | 19/20 | 3,1 |
| {5} PA6 + 30%GF(A) +0,3%VAH +0,5%VA | 63 | 232 | 29/27 | -0,4 |
| {6} PA6 +30%GF(B) +0,3%VAH | 55 | 227 | 46/46 | -0,6 |
| {7} PA6 +30%GF(B) +0,3%VAH +1%M1251 | 56 | 226 | 26/26 | 1,4 |
| {8} PA6 +30%GF(B) +0,3%VAH +0,5%VA | 55 | 218 | 31/27 | 1,0 |
| {9} PA6 +30%GF(A) +0,3%VAH +1%M1251 (#) | 67 | 237 | 18/19 | 2,1 |
| {10} PA6 +30%GF(B) +0,3%VAH +5%M1251 | | | 22/22 | |
| GF(A): Glasfaserstapel der Firma Owns Corning | | | | |
| GF(B): Glasfaserstapel der Firma Glasseiden GmbH Oschatz | | | | |
| VAH: Montanat (Verarbeitungshilfsmittel) | | | | |
| VAS: Phosphonat (Verarbeitungsstabilisator) | | | | |
| AX: Mischung aus Phosphit und st. gehindertem phenolischen Antioxidans | | | | |
| VA: Additiv mit nur einer Carbonateinheit | | | | |
| (#): Zudosierung des Additivs erfolgte erst bei Zugabe der Glasfasern | | | | |

Die erfindungsgemäßen Versuche {2} bis {4},{7},{9} und {10} zeigen, daß das erfindungsgemäße Additiv eine erfolgreiche Aufkondensierung auch in Gegenwart verschiedener Zuschlag-stoffe ermöglicht. Weder Glasfasern noch Verarbeitungshilfsmittel oder Antioxidationsmittel führen zu einer Verschlech-terung der Reaktion. Im Gegenteil, mit dem Zuschlagstoff H175 tritt sogar eine verstärkte Aufkondensation auf, was nur durch einen überraschenden Synergismus erklärt werden kann.

Die b-Werte zeigen, daß das erfindungsgemäße Additiv nur eine schwache Vergilbung hervorruft, die in einem akzeptablen Bereich liegt (zunehmend positiver b-Wert bedeutet Zunahme der Vergilbung). Die Versuche ohne Additiv zeigen im Vergleich dazu einen erwartet hohen MFI, d.h eine Aufkondensation hat hier nur unwesentlich stattgefunden. Die Versuche mit einem nicht erfindungsgemaßen Additiv zeigen zwar akzeptable Werte, jedoch war die Handhabung schwierig. Weiterhin war mit diesem Additiv eine Aufkondensierung in Gegenwart von AX und VAS nur mit erhöhtem Einsatz an Additiv möglich, da störende Nebenreak-tionen auftraten. Dies zeigt wiederum die überlegene Wirkung der erfindungsgemäßen Additive, die solche Nebenreaktionen nicht zeigen.

Versuch {9} zeigt, daß eine erfindungsgemäße Verfahrensführung auch dann möglich ist, wenn das Additiv erst relativ spät zusammen mit den Glasfasern eindosiert wird. Die Aufkondensationsreaktion ist sehr gut und auch die Schlagzähigkeit nach Charpy ist hervorragend.

### Aufkondensierungsreaktionen bei erfindungsgemäßer Verwendung von Additiven mit geringer Anzahl an Carbonateinheiten

### Synthese des Additivs OC I:

0,3 mol (64,3 g) Diphenylcarbonat (DPC) wurden mit 0,2 mol (46,7 g) Bisphenol A und einer Spatelspitze Zinkacetylacetonat (als Katalysator) 4 Stunden bei 240°C unter Stickstoff gerührt. Das entstehende Phenol wurde abdestilliert. Das erhaltene feste Produkt war ein Oligocarbonat mit durchschnittlich 3 Carbonateinheiten.

### Synthese des Additivs OC II:

0,3 mol (64,3 g) Diphenylcarbonat (DPC) wurden mit 0,2 mol (18 g) 1,4-Butandiol und einer Spatelspitze Zinkacetylacetonat (als Katalysator) 5 Stunden bei 180°C und dann 1 Stunde bei 220°C unter Stickstoff gerührt. Das entstehende Phenol wurde abdestilliert. Die erhaltene ölige Flüssigkeit war ein Oligocarbonat mit durchschnittlich 3 Carbonateinheiten.

Die synthetisierten Additive OC I und OC II wurden in Laborkneteruntersuchungen zur Aufkondensation von Polyamid 6 eingesetzt.

Die Ergebnisse sind in Tabelle 6 dargestellt.

**Tabelle 6**

| Polymer | Additiv | | Drehmoment [Nm] |
|---|---|---|---|
| 50 g PA-6 | ohne | | 1,8 Nm |
| 50 g PA-6 | OC I | 0,5 g = 1 Ma.-% | 3,5 Nm |
| 50 g PA-6 | OC I | 1 g = 2 Ma.-% | 8,0 Nm |
| 50 g PA-6 | OC I | 2 g = 4 Ma.-% | 14,0 Nm |
| 50 g PA-6 | OC II | 0,6 g = 1,2 Ma.-% | 3,5 Nm |
| 50 g PA-6 | OC II | 1,1 g = 2,2 Ma.-% | 7,4 Nm |
| Versuchsbedingungen: Haake-Laborkneter, elektrisch beheizte Kammer 50 g PA-6; 250°C; 80 U/min OC I - Dosierung als Festsubstanz OC II - Dosierung als Flüssigkeit (Rückwaage des Tropfers), Reaktion langsamer | | | |

Die in der Tabelle gezeigten Drehmomente zeigen, dass auch erfindungsgemäß verwendete Additive mit einer geringen Anzahl an Carbonateinheiten wirksam zur Aufkondensierung verwendet werden können. Die erreichte Steigerung der Werte für das Drehmoment zeigen, dass eine Aufkondensationsreaktion stattfindet.

### Beispiel III: Kompatibilisierung von Polycarbonat-Polvamid 6-Blends

Polyamid 6 (Ultramid-Typ) wurde mit Polycarbonat (Lexan-Typ) in einem Haake-Doppelschneckenextruder mit einer speziellen Compoundierschnecke (Wellendurchmesser 16 mm) mit einem Durchsatz von 2 kg/h unter Zusatz der in Tabelle 7 angegebenen Menge an Additiv (B5: Polyamid 6-Polycarbonat-Blockcopolymer aus Beispiel 1) verarbeitet. Als Vergleichsbetspiel wurde reines Polycarbonat verwendet. Die Produkte wurden nach Granulierung sofort im Vakuum bei 90°C getrocknet, so dass kein Wasser vom Polyamid aufgenommen werden konnte. Dann wurde durch Spritzgießen zu Prüfkörpern verarbeitet. Die Prüfkörper wurden unter spritzgießtrockenen Bedingungen auf Zugfestigkeit (Maximalspannung) und E-Modul geprüft. Die erhaltenen Ergebnisse sind in Tabelle 7 angegeben.

**Tabelle 7**

| **Werkstoff** | **Zugfestigkeit [MPa]** | **E-Modul [MPa]** |
|---|---|---|
| 100 Ma.-% PC + 0 Ma.-% B5 | 61,2 | 2210 |
| 100 Ma.-% PC + 2 Ma.-% B5 | 57,3 | 2228 |
| 100 Ma.-% PC + 4 Ma.-% B5 | 56,4 | 2260 |
| 100 Ma.-% PC + 6 Ma.-% B5 | 56,0 | 2260 |
| 80 Ma.-% PC/20 Ma.-% PA 6 + 0 Ma.-% B5 | 48,8 | 2310 |
| 80 Ma.-% PC/20 Ma.-% PA 6 + 2 Ma.-% B5 | 62,3 | 2260 |
| 80 Ma.-% PC/20 Ma.-% PA 6 + 4 Ma.-% B5 | 61,6 | 2240 |
| 80 Ma.-% PC/20 Ma.-% PA 6 + 6 Ma.-% B5 | 63,4 | 2260 |

Weiter wurde der Schmelzflussindex (MFI) getestet. Diese Ergebnisse sind in Tabelle 8 angegeben.

**Tabelle 8**

| **Werkstoff** | **MFI 280°C, 2,16 kg) [g/10 min]** |
|---|---|
| 100 Ma.-% PC + 0 Ma.-% B5 | 13,1 |
| 100 Ma.-% PC + 2 Ma.-% B5 | 15,4 |
| 100 Ma.-% PC + 4 Ma.-% B5 | 15,6 |
| 100 Ma.-% PC + 6 Ma.-% B5 | 16,7 |
| 80 Ma.-% PC/20 Ma.-% PA 6 + 0 Ma.-% B5 | 18,1 |
| 80 Ma.-% PC/20 Ma.-% PA 6 + 2 Ma.-% B5 | 29,8 |
| 60 Ma.-% PC/40 Ma.-% PA 6 + 0 Ma.-% B5 | 12,1 |
| 60 Ma.-% PC/40 Ma.-% PA 6 + 2 Ma.-% B5 | 16,2 |

Die erhaltenen Ergebnisse zeigen, dass eine ausgezeichnete Kompatibilisierung erreicht wurde.

## Patentansprüche

1. Verfahren zur Aufkondensierung von Oligo- und/oder (Co-)Polyamiden, **dadurch gekennzeichnet, daß** als Additiv mindestens eine Verbindung mit mindestens zwei Carbonateinheiten verwendet wird.

2. Verfahren nach Anspruch 1, **dadurch gekennzeichnet, daß** das Additiv zusätzlich Oligo- oder Poly-amid-, -ester-, -ether-, -etheresteramid- oder -esteramideinheiten enthält.

3. Verfahren nach Anspruch 1 oder 2, **dadurch gekennzeichnet, daß** das Additiv einen Schmelzindex von 20 bis 300 aufweist.

4. Verfahren nach mindestens einem der vorstehenden Ansprüche, **dadurch gekennzeichnet, daß** das Additiv ein Blockcopolymer vom AB- oder A[BA]_{n≥1}-Typ ist, worin A einen Polycarbonatblock und B einen Nichtpolycarbonatblock darstellt.

5. Verfahren nach Anspruch 4, **dadurch gekennzeichnet, daß** der Block B aus einem Oligo- oder Polyamidblock, einem Oligo- oder Polyesterblock, einem Oligooder Polyetherblock, einem Oligo- oder Polyetheresteramidblock oder einem Oligo- oder Polyesteramidblock oder Gemischen oder (Block-)Copolymeren davon ausgewählt wird.

6. Verwendung mindestens einer Verbindung mit mindestens zwei Carbonateinheiten als Additiv zur Aufkondensierung von Oligo- und/oder (Co-)Polyamiden.

7. Verwendung nach Anspruch 6, **dadurch gekennzeichnet, daß** die Verbindung mit mindestens zwei Carbonateinheiten zusätzlich Oligo- oder Poly-amid-, -ester-, -ether-, -etheresteramid- oder -esteramideinheiten enthält.

8. Verwendung nach Anspruch 6 oder 7, **dadurch gekennzeichnet, daß** die Verbindung einen Schmelzindex von 20 bis 300 aufweist.

9. Verwendung nach mindestens einem der Ansprüche 6 bis 8, **dadurch gekennzeichnet, daß** die Verbindung ein Blockcopolymer vom AB- oder A[BA]_{n≥} ₁-Typ ist, worin A einen Polycarbonatblock und B einen Nichtpolycarbonatblock darstellt.

10. Verwendung nach Anspruch 9, **dadurch gekennzeichnet, daß** der Block B aus einem Oligo- oder Polyamidblock, einem Oligo- oder Polyesterblock, einem Oligooder Polyetherblock, einem Oligo- oder Polyetheresteramidblock oder einem Oligo- oder Polyesteramidblock oder Gemischen oder (Block-)Copolymeren davon ausgewählt wird.

11. Verwendung mindestens eines Blockcopolymeren vom AB- oder A[BA]_{n≥1}-Typ, worin A einen Polycarbonatblock und B einen Nichtpolycarbonatblock darstellt, zur Kompatibilisierung von Polymerblends, umfassend Polymere vom Typ A und vom Typ B.

12. Additiv zur Aufkondensierung von Oligo- und/oder (Co-)Polyamiden, enthaltend mindestens ein Strukturelement mit der Formel (I):
**[P-L-CE**^{**1**}**-CE**^{**2**}**] (I)**
worin P einen Oligo- oder Polyamidblock, einen Oligo- oder Polyesterblock, einen Oligo- oder Polyetherblock, einen Oligo- oder Polyetheresteramidblock oder einen Oligo- oder Polyesteramidblock darstellt, CE¹ und CE² jeweils Carbonateinheiten darstellen, die gleich oder verschieden sein können und L eine Verbindungsgruppe darstellt, ausgewählt aus zweiwertigen Gruppen und einer Einfachbindung.

13. Additiv nach Anspruch 11, **dadurch gekennzeichnet, daß** L-COO- darstellt.

14. Additiv nach Anspruch 11 oder 12, **dadurch gekennzeichnet, daß** es zusätzlich einen Oligo- oder Polycarbonatblock umfaßt, verbunden mit dem Strukturelement (I) durch CE².

15. Additiv nach Anspruch 12 oder 13, **dadurch gekennzeichnet, daß** P einen Oligooder Polyamidblock darstellt.

16. Additiv nach Anspruch 11, erhältlich durch reaktives Extrudieren eines Polycarbonats mit einem -COOH-terminierten Polyamid.

17. Verwendung des Additivs nach mindestens einem der Ansprüche 12 bis 16 zur Kompatibilisierung von Blends aus Polyamid und Polycarbonat.

## Claims

1. Process for the condensation of oligo- and/or (co-)polyamides, **characterized in that** as additive at least one compound with at least two carbonate units is employed.

2. Process according to claim 1, **characterized in that** the additive further comprises oligo- or polyamide, oligo- or polyester, oligo- or polyether, oligo- or polyetheresteramide or oligo- or polyesteramide units.

3. Process according to claim 1 or 2, **characterized in that** the additive has a melt index of from 20 to 300.

4. Process according to at least one of the preceding claims, **characterized in that** the additive is a block copolymer of the AB-type or A[BA]_{n≥1}-type, wherein A represents a polycarbonate block and B represents a non-polycarbonate block.

5. Process according to claim 4, **characterized in that** the block B is selected among oligo- or polyamide blocks, oligo- or polyester blocks, oligo- or polyether blocks, oligo- or polyetheresteramide blocks, oligo- or polyesteramide blocks or mixtures or (block-) copolymers thereof.

6. Use of at least one compound with at least two carbonate units as additive for the condensation of oligo- and/or (co-)polyamides.

7. Use according to claim 6, **characterized in that** the compound further comprises oligo- or polyamide, oligo- or polyester, oligo or polyether, oligo- or polyetheresteramide or oligo- or polyesteramide units.

8. Use according to claim 6 or 7, **characterized in that** the compound has a melt index of from 20 to 300.

9. Use according to at least one of claims 6 to 8, **characterized in that** the compound is a block copolymer of the AB-type or A[BA]_{n≥1}-type, wherein A represents a polycarbonate block and B represents a non-polycarbonate block.

10. Use according to claim 9, **characterized in that** the block B is selected among oligo- or polyamide blocks, oligo- or polyester blocks, oligo- or polyether blocks, oligo- or polyetheresteramide blocks, oligo- or polyesteramide blocks or mixtures or (block-) copolymers thereof.

11. Use of at least one block copolymer of the AB-type or A[BA]_{n≥1}-type, wherein A represents a polycarbonate block and B represents a non-polycarbonate block, for the compatibilisation of polymer blends, comprising polymers of type A and type B.

12. Additive for the condensation of oligo- and/or (co-)polyamides, comprising at least one structural element of formula (I):
**[P-L-CE**^{**1**}**-CE**^{**2**}**] (I)**
wherein P represents an oligo- or polyamide block, an oligo- or polyester block, an oligo- or polyether block, an oligo- or polyetheresteramide block, or an oligo- or polyesteramide block, CE¹ and CE² represent carbonate units, which may be the same or different, and L represents a linking group, selected among divalent groups and a single bond.

13. Additive according to claim 11, **characterized in that** L represents -COO-.

14. Additive according to claim 11 or 12, **characterized in that** it further comprises an oligo- or polycarbonate block, linked with the structural element (I) via CE².

15. Additive according to claim 12 or 13, **characterized in that** P represents an oligo- or polyamide block.

16. Additive according to claim 12, obtainable by reactive extrusion of a polycarbonate with a COOH-terminated polyamide.

17. Use of the additive according to at least one of claims 12 to 16 for the compatibilisation of blends of polyamide and polycarbonate.

## Revendications

1. Procédé de condensation d'oligo- et/ou de (co)polyamides, **caractérisé en ce que** l'on utilise comme additif, au moins un composé ayant au moins deux unités carbonate.

2. Procédé selon la revendication 1, **caractérisé en ce que** l'additif contient en outre, des unités oligo- ou polyamide, -ester, -éther, étheresteramide ou esteramide.

3. Procédé selon la revendication 1 ou 2, **caractérisé en ce que** l'additif présente un indice de fusion allant de 20 à 300.

4. Procédé selon au moins l'une des revendications précédentes, **caractérisé en ce que** l'additif est un copolymère séquencé de type AB- ou A[BA]_{n≥1}-, où A représente une séquence polycarbonate et B une séquence non-polycarbonate.

5. Procédé selon la revendication 4, **caractérisé en ce que** la séquence B est choisie parmi une séquence oligo- ou polyamide, une séquence oligo- ou polyester, une séquence oligo- ou polyéther, une séquence oligo- ou polyétheresteramide ou une séquence oligo- ou polyesteramide, ou les mélanges ou les copolymères (séquencés) de ceux-ci.

6. Utilisation d'au moins un composé avec au moins deux unités carbonate comme additif pour la condensation d'oligo et/ou (co)polyamides.

7. Utilisation selon la revendication 6, **caractérisé en ce que** le composé avec au moins deux unités carbonate, contient en outre des unités oligo- ou polyamide, -ester-, -éther-, -étheresteramide- ou -esteramide-.

8. Utilisation selon la revendication 6 ou 7, **caractérisé en ce que** le composé présente un indice de fusion allant de 20 à 300.

9. Utilisation selon au moins l'une des revendications 6 à 8, **caractérisé en ce que** le composé est un copolymère séquencé de type AB- ou A[BA]_{n≥1}-, où A représente une séquence polycarbonate et B une séquence non-polycarbonate.

10. Utilisation selon la revendication 9, **caractérisé en ce que** la séquence B est choisi parmi une séquence oligo- ou polyamide, une séquence oligo- ou polyester, une séquence oligo- ou polyéther, une séquence oligo- ou polyétheresteramide ou une séquence oligo- ou polyesteramide, ou les mélanges ou les copolymères (séquencés) de ceux-ci.

11. Utilisation d'au moins un copolymère séquencé de type AB- ou A[BA]_{n≥1}-, où A représente une séquence polycarbonate et B une séquence non-polycarbonate, pour rendre compatibles des mélanges de polymères, comprenant des polymères de type A et de type B.

12. Additif de condensation d'oligo- et/ou de (co)polyamides, contenant au moins un élément structurel ayant la formule (I) :
[ P - L - CE¹ - CE² ] (I)
où P représente une séquence oligo- ou polyamide, une séquence oligo- ou polyester, une séquence oligo- ou polyéther, une séquence oligo- ou polyétheresteramide ou une séquence oligo- ou polyesteramide, CE¹ et CE² représentent chaque fois, des unités carbonate, qui peuvent être identiques ou différentes et L représente un groupe de liaison, choisi parmi les groupes divalents et une simple liaison.

13. Additif selon la revendication 11, **caractérisé en ce que** L représente -COO-.

14. Additif selon la revendication 11 ou 12, **caractérisé en ce qu'**il comprend en outre, une séquence oligo- ou polycarbonate, reliée à l'élément de structure (I) par CE².

15. Additif selon la revendication 12 ou 13, **caractérisé en ce que** P représente une séquence oligo- ou polyamide.

16. Additif selon la revendication 11, obtenu par l'extrusion réactive d'un polycarbonate avec un polyamide à terminaison -COOH-.

17. Utilisation de l'additif selon au moins l'une des revendications 12 à 16, pour rendre compatible des mélanges de polyamide et de polycarbonate.
